(19) **Europäisches Patentamt**
**European Patent Office**
**Office européen des brevets**

(11) **EP 4 567 466 A1**

(12) **EUROPEAN PATENT APPLICATION**

(43) Date of publication:
**11.06.2025 Bulletin 2025/24**

(51) International Patent Classification (IPC):
**G01S 13/74** (2006.01)    **G01S 13/76** (2006.01)
**G01S 13/84** (2006.01)

(21) Application number: **24169655.8**

(22) Date of filing: **11.04.2024**

(52) Cooperative Patent Classification (CPC):
**G01S 13/767; G01S 13/74; G01S 13/765;**
**G01S 13/84**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **06.12.2023 RO 202300809**

(71) Applicant: **NXP B.V.**
**5656 AG Eindhoven (NL)**

(72) Inventors:
• **Stanciu, Mihai-Ionut**
**5656AG Eindhoven (NL)**
• **Gambus, Laurent**
**5656AG Eindhoven (NL)**
• **Bisson, Franck**
**5656AG Eindhoven (NL)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

(54) **SHORT-RANGE WIRELESS DISTANCE RANGING**

(57)    An integrated circuit for use in a short-range communication reflector device, the integrated circuit comprising a processor and a tone generator electrically coupled to the processor, wherein, for each channel of a plurality of channels, the processor is configured to process incoming tone signals received via a plurality of antenna paths, and to determine an IQ value of an incoming tone signal received on a selected antenna path of the plurality of antenna paths, the tone generator is configured to generate, for each antenna path, an outgoing tone signal for transmission and the processor is configured to instruct the tone generator to apply a phase shift to each outgoing tone signal, wherein the phase shift is equal to the phase of the determined IQ value for the selected antenna path.

Figure 5

**Description**

TECHNICAL FIELD

The present specification relates to systems and methods for performing short-range wireless distance ranging between a reflector and an initiator. In particular, the present specification provides an integrated circuit for use in a short-range communication reflector device, and a reflector device comprising such an integrated circuit.

BACKGROUND

In the context of the present disclosure, distance ranging refers to the process of determining a distance between a reflector device and an initiator device (or simply a reflector and an initiator). Typically, this distance ranging can be done in two different ways: two-way tone exchange between the reflector and the initiator, or two-way packet exchange between the reflector and the initiator.

The reflector and the initiator may be configured for any kind of short-range wireless communication, such as short-range radio or Bluetooth® communication.

SUMMARY

Aspects of the present disclosure are set out in the accompanying independent and dependent claims. Combinations of features from the dependent claims may be combined with features of the independent claims as appropriate and not merely as explicitly set out in the claims.

According to a first aspect of the present disclosure, there is provided an integrated circuit for use in a short-range communication reflector device, the integrated circuit comprising a processor and a tone generator electrically coupled to the processor. For each channel of a plurality of channels the processor is configured to process incoming tone signals received via a plurality of antenna paths, and to determine an IQ value of an incoming tone signal received on a selected antenna path of the plurality of antenna paths, the tone generator is configured to generate, for each antenna path, an outgoing tone signal for transmission, and the processor is configured to instruct the tone generator to apply a phase shift to each outgoing tone signal, wherein the phase shift is equal to the phase of the determined IQ value for the selected antenna path.

The phase shift is therefore equal to an RF channel phase plus a phase ambiguity term. The phase ambiguity term is equal to the difference between the phase ambiguity of the initiator and the reflector.

Optionally, the selected antenna path is the same antenna path for each channel of the plurality of channels. Thus, the selected antenna path may be fixed for each channel of the plurality of channels.

Optionally, the selected antenna path is a different antenna path of the plurality of antenna paths for successive channels of the plurality of channels. Thus, the selected antenna path may sequentially vary.

Optionally, for each channel, the selected antenna path is the antenna path on which a chronologically first tone signal is received.

Optionally, for each channel, the selected antenna path is the antenna path on which the nth tone signal is received, wherein n is any integer. For example, the selected antenna path may always be the antenna path on which the chronologically 2nd tone signal is received at the reflector, or on which the chronologically 3rd tone signal is received at the reflector, etc.

Optionally, for each channel, the selected antenna path is the antenna path on which a chronologically last tone signal is received.

Optionally, the processor may be configured to measure the IQ value of each incoming tone signal. However, only the IQ value corresponding to the selected antenna path is used to determine the phase shift.

The integrated circuit may further comprise a mixer. The mixer may be configured to down-convert incoming tone signals. The tone generator may comprise a local oscillator.

The integrated circuit may further comprise a power amplifier electrically coupled to both the processor and the tone generator.

For each channel of the plurality of channels, the processor may be further configured to determine a tone quality indicator, TQI, of the incoming tone signal received on the selected antenna path.

The processor may be further configured to instruct the power amplifier to modulate an amplitude of each outgoing tone signal based on the determined TQI of the incoming tone signal received on the selected antenna path. Thus, the outgoing tone signals may be configured to provide inline TQI data.

The processor may be further configured to determine a tone quality indicator, TQI, of each incoming tone signal.

The processor may be further configured to instruct (or control) the power amplifier to modulate an amplitude of each outgoing tone signal based on the determined TQI of the corresponding incoming tone signal. Thus, the amplitude of each outgoing tone signal may be individually modulated to provide inline TQI data.

Optionally, the processor is further configured to instruct the power amplifier to decrease the amplitude of the outgoing tone signal if the determined TQI is below a quality threshold.

The processor may be configured to instruct the power amplifier to attenuate or reduce the amplitude of the outgoing tone signal by at least 50% if the determined TQI is below the quality threshold.

Optionally, the processor is configured to set the amplitude of the outgoing tone signal to a first amplitude if the determined TQI is within a first range of values (e.g. above the quality threshold). Optionally, the processor is configured to set the amplitude of the outgoing tone signal to a second amplitude if the determined TQI is within a second range of values (e.g. below the quality threshold). Thus, the second amplitude may be less than the first amplitude.

According to a second aspect of the present disclosure, there is provided a short-range communication reflector device, comprising at least one antenna and the integrated circuit according to any embodiment or example of the first aspect of this disclosure.

The short-range communication reflector device may simply be referred to as a short-range communication device.

Optionally, the short-range communication reflector device may comprise a plurality of antennas.

Optionally, the short-range communication reflector device may be a key such as a vehicle key or a door key, or a mobile phone, or an electronic door lock, or a portable electronic device. It will be appreciated that this list is not exhaustive.

According to a third aspect of the present disclosure, there is provided a method for performing short-range wireless distance ranging. The method comprises a two-way exchange of tones along a plurality of antenna paths between a reflector device and an initiator device.

The method comprises, for each channel of a plurality of channels, receiving, at a reflector, incoming tone signals via a plurality of antenna paths, determining, at the reflector, an IQ value of an incoming tone signal received on a selected antenna path of the plurality of antenna paths, generating, for each antenna path, an outgoing tone signal for transmission, applying a phase shift to each outgoing tone signal prior to transmission, wherein the phase shift is equal to the phase of the determined IQ value for the selected antenna path, and transmitting, from the reflector to an initiator, the phase shifted outgoing tone signals via the plurality of antenna paths.

Optionally, the selected antenna path is the same antenna path for each channel of the plurality of channels.

Optionally, the selected antenna path is a different antenna path of the plurality of antenna paths for successive channels of the plurality of channels. Thus, the selected antenna path may sequentially vary.

Optionally, for each channel, the selected antenna path is the antenna path on which a chronologically first tone signal is received.

Optionally, for each channel, the selected antenna path is the antenna path on which the nth tone signal is received, wherein n is any integer. For example, the selected antenna path may always be the antenna path on which the chronologically 2nd tone signal is received at the reflector, or on which the chronologically 3rd tone signal is received at the reflector, etc.

Optionally, for each channel, the selected antenna path is the antenna path on which a chronologically last tone signal is received.

Optionally, the method further comprises determining a tone quality indicator, TQI, of the incoming tone signal received on the selected antenna path and modulating an amplitude of each outgoing tone signal prior to transmission based on the determined TQI of the incoming tone signal received on the selected antenna path. Thus, for each channel, the TQI of the selected antenna path may be used to modulate the amplitude of each outgoing signal.

Optionally, the method further comprises determining a tone quality indicator, TQI, of each incoming tone signal and modulating an amplitude of each outgoing tone signal prior to transmission based on the determined TQI of the corresponding incoming tone signal. Thus, for each channel, the amplitude of each outgoing tone signals may be individually modulated based on the determined TQI of the incoming tone signal received on the corresponding antenna path.

Optionally, the method further comprises determining, at the initiator, a distance between the reflector and the initiator using the phase shifted outgoing tone signals and a distance ranging algorithm.

The method may further comprise, determining, at the initiator, an IQ value for each tone signal received from the reflector.

Determining a distance between the reflector and the initiator may comprise using the IQ values measured by the initiator in the distance ranging algorithm.

The method may comprise executing, at the initiator, a phase-based distance ranging algorithm. Thus, the distance ranging algorithm may be a phase-based distance ranging algorithm.

BRIEF DESCRIPTION OF THE DRAWINGS

Embodiments of this disclosure will be described hereinafter, by way of example only, with reference to the accompanying drawings in which like reference signs relate to like elements and in which:

> **Figure 1** shows a block diagram of a reflector and initiator according to the prior art;
> **Figure 2** illustrates two-way packet and tone exchange between a reflector and an initiator;
> **Figure 3** is a representation of two-way tone exchange between an initiator and a reflector;
> **Figure 4** is a representation of two-way packet exchange between an initiator and a reflector;
> **Figure 5** is a block diagram of a short-range communication system according to an embodiment of this disclosure;
> **Figure 6** is a block diagram of a reflector and an initiator illustrating multiple antenna paths;
> **Figure 7** is a flowchart illustrating a distance ranging method according to an embodiment of this disclosure;
> **Figure 8** shows a reflector according to an embodiment of this disclosure;
> **Figure 9** is a block diagram of a reflector according to another embodiment of this disclosure; and
> **Figure 10** is a flowchart illustrating a distance ranging method according to an embodiment of this disclosure.

DETAILED DESCRIPTION

Embodiments of this disclosure are described in the following with reference to the accompanying drawings.

The following detailed description is merely illustrative in nature and is not intended to limit the embodiments of the subject matter or the application and uses of such embodiments. As used herein, the words "exemplary" and "example" mean "serving as an example, instance, or illustration." Any implementation described herein as exemplary or an example is not necessarily to be construed as preferred or advantageous over other implementations. Furthermore, there is no intention to be bound by any expressed or implied theory presented in the preceding technical field, background, or the following detailed description. Features are not shown to scale in the drawings unless it is explicitly stated otherwise.

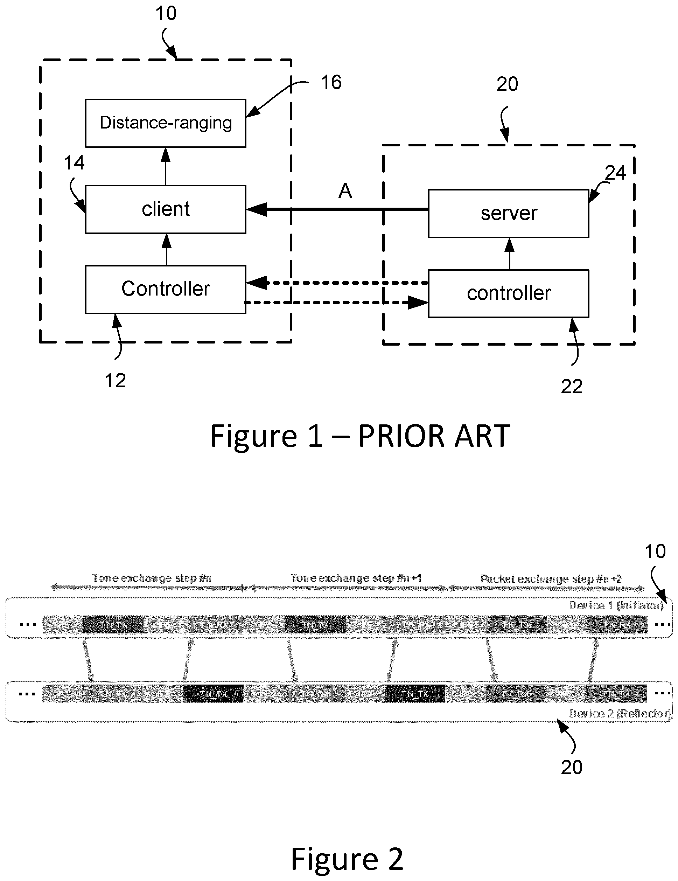

Figure 1 is a block diagram showing an example of distance ranging between a reflector and an initiator according to the prior art. The short-range communication system comprises an initiator 10 and a reflector 20. The short-range communication system may be, but is not limited to, a short-range radio communication system, or a Bluetooth® communication system, or an NFC communication system, etc.

The initiator 10 and the reflector 20 are very similar devices, however, the initiator is configured to execute a distance ranging algorithm 16 to determine a distance between the initiator 10 and the reflector 20.

In the example in Figure 1, the initiator 10 comprises a controller 12 and the reflector 20 comprises a controller 22. The controllers 12, 22 are configured to execute a two-way exchange of packets and/or tones between the devices, as represented by the dotted or broken lines.

An example of a two-way exchange of tones and packets between the initiator 10 and the reflector 20 is shown in Figure 2. In Figure 2, TN_TX is an outgoing tone that is transmitted from the initiator 10 or the reflector 20, and TN_RX is an incoming tone that is received by the initiator 10 or the reflector 20. Similarly, PK_TX is an outgoing packet that is transmitted from the initiator 10 or the reflector 20, and PK_RX is an incoming packet that is received by the initiator 10 or the reflector 20. IFS refers to an interframe spacing between the adjacent tones and packets.

In addition to the two-way exchange of packets and/or tones, the reflector 20 is required to transmit additional data to the initiator 10, as represented by the solid arrow A. This additional data includes measurement data related to the tones and/or packets received at the reflector. For tone exchange, this measurement data typically includes tone quality indicator (TQI) data and in-phase quadrate (IQ) values for each tone received from the initiator. For packet exchange, this measurement data typically includes packet quality indicator (PQI) data and time-stamps (or timing data) for each packet received from the initiator. The additional data is transmitted to the initiator via protocol packets or a legacy connection A that is separate and distinct to the communication channel exchanging the tone and/or packets.

The reflector controller 22 transmits the additional data to a server 24. The server 24 is configured to transmit this additional data to a client 14 at the initiator device 10. The initiator controller 12 provides measurement data related to the tones and/or packets received at the initiator to the client 14. Equivalently, the server 24 could be referred to as a transmitter and the client 14 could be referred to as a receiver. The reflector measurement data (received at the client 14) is required to be transmitted to the initiator, so that the initiator 10 can combine the reflector measurement data with the initiator measurement data for use in the distance ranging algorithm 16.

As stated above, the additional data, including the measurement data, is transmitted by the server 24 to the client 14 via a legacy communication channel A that is separate to the communication channel transmitting and receiving the tones/packets. The transfer of this additional data from the reflector 20 to the initiator 10 increases latency and delays, as a large amount of data is often required to be transmitted. For example, for two-way tone exchange, the additional data that is required to be transmitted to the initiator may be up to 3 kBytes, which could take up to the order of a hundred milliseconds to be transmitted. In comparison, the two-way tone exchange may only take of the order of tens of milliseconds to be completed. Thus, this additional data can delay the distance ranging process, and can result in a system bottleneck. It is an object of the present disclosure to reduce the amount of data that is required to be transmitted via the legacy connection A, thereby reducing latency and improving efficiency of the distance ranging process.

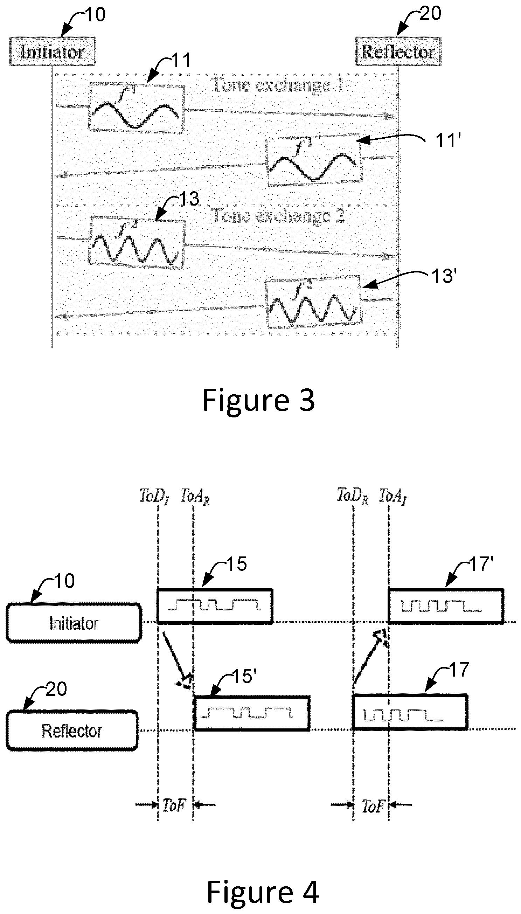

For completeness, Figure 3 is a simplified illustration of the two-way exchange of tones between the initiator 10 and the reflector 20. Two-way tone exchange may also be referred to as phase-based distance ranging. The initiator 10 and the reflector 20 collaborate to measure the frequency response of a propagation channel between them. For simplicity, only a single antenna path per channel is represented in Figure 3.

As shown in Figure 3, a first tone 11 is transmitted from the initiator 10 to the reflector 20 on a first channel having a first frequency f$^1$. The first tone 11 is received at the reflector 20 and the reflector measures the channel response. The IQ values and TQI are measured at the reflector 20 for the first tone signal 11 received. The reflector 20 then outputs a first tone 11' on the same channel (having a first frequency f$^1$) to the initiator 10. The initiator 10 will then measure the channel response, including measuring the IQ value and TQI for the received tone signal. A second tone 13 is then transmitted from the initiator 10 to the reflector 20 on a second channel having a second frequency f$^2$. The second tone 13 is received at the reflector 20 and the reflector measures the channel response, including measuring the IQ value and TQI. The reflector 20 then outputs a second tone 13' on the same channel (having the second frequency f$^2$) to the initiator 10. The initiator 10 will then measure the channel response, including measuring the IQ value and TQI for the received tone signal. This process is then repeated for a plurality of channels until the channel response is measured over a bandwidth B with a frequency step size Δf.

In Figure 3, for simplicity only two channels are depicted, having a frequency step size Δf = f$^2$-f$^1$. As explained above, according to the prior art, the reflector's measured data including the TQI and IQ values are transmitted from the reflector 20 to the initiator 10 via protocol packets (see Figure 1). The initiator 10 then estimates the distance between the initiator 10 and the reflector 20 using the initiator measured data and the reflector measured data. It will be appreciated that the phase of a tone distorts over distance. There are a variety of known distance ranging algorithms for phase-based distance ranging (or tone-based distance ranging), as would be appreciated by the skilled person. Any applicable distance ranging algorithm may be used in the systems or methods of the present disclosure.

A more detailed mathematical discussion of the two-way tone exchange process is detailed below:

- On a frequency step $k$, antenna path $p$, a tone is sent by the initiator 10 and received by the reflector 20. The initiator 10 and the reflector 20 do not preserve phase coherency while jumping through frequency steps.

- The in-phase quadrature (IQ) of the received tone measured by the reflector is given by equation 1 below:

$$(1) - \quad iq_R^{k,p} = \alpha^{k,p} * e^{j\phi^{k,p}} * e^{j(\varphi_I^k - \varphi_R^k)}$$

  - wherein $\alpha^{k,p}$ and $\phi^{k,p}$ are the RF channel magnitude and phase for step $k$, antenna path $p$

  - $\varphi_I^k$ and $\varphi_R^k$ are the phase ambiguity of the initiator and reflector tone generators (local oscillators), this term is independent of the antenna path

- Additionally, to the IQ measurements, devices are performing tone quality indicator ($tqi^{k,p}$) measurements, for each step/ antenna path

- The reflector 20 then transmits back a tone on the same step/ antenna path to the initiator 10. The initiator 10 then measures the IQ of the received tone, as given by equation 2 below:

$$(2) - \quad iq_I^{k,p} = \alpha^{k,p} * e^{j\phi^{k,p}} * e^{j(\varphi_R^k - \varphi_I^k)}$$

- All measurements are collected at the device running the distance ranging algorithm (in this example this is the initiator 10), thus $\{iq_R^{k,p}, tqi_R^{k,p}\}$ need to be sent from the reflector 20 to the initiator 10, using the connection-oriented Client/Server model as shown in Figure 1.

- The initiator 10 multiplies the IQ measured by the reflector 10 (equation 1) with the IQ measured by the initiator (equation 2) as per equation 3 below, to thereby remove the phase ambiguity ($\varphi_I^k$ and $\varphi_R^k$) (this operation results in the squared frequency domain TF of the RF channel):

$$(3) - \qquad iq^{k,p} = iq_I^{k,p} * iq_R^{k,p} = (\alpha^{k,p})^2 * e^{j2\phi^{k,p}}$$

The IQ values resulting from equation 3 for each step/antenna path are then used in a phase-based distance ranging algorithm to determine the distance between the reflector 20 and the initiator 10. Such algorithms are well-known in the art. It will be appreciated that Equations (1), (2) and (3) have the purpose of illustrating a concept, and they do not necessarily reflect all impairments which may be specific to or associated with particular initiator and reflector practical implementations.

Figure 4 is a simplified illustration of the two-way exchange of packets (or distance-ranging packets) between the initiator 10 and the reflector 20. Two-way packet exchange may also be referred to as round-trip time (RTT) distance ranging, or timing-based distance ranging. The initiator 10 and the reflector 20 collaborate to measure the RTT of packets exchanged on a propagation channel between them. It will be appreciated that the greater the distance is between the two devices, the longer the RTT will be.

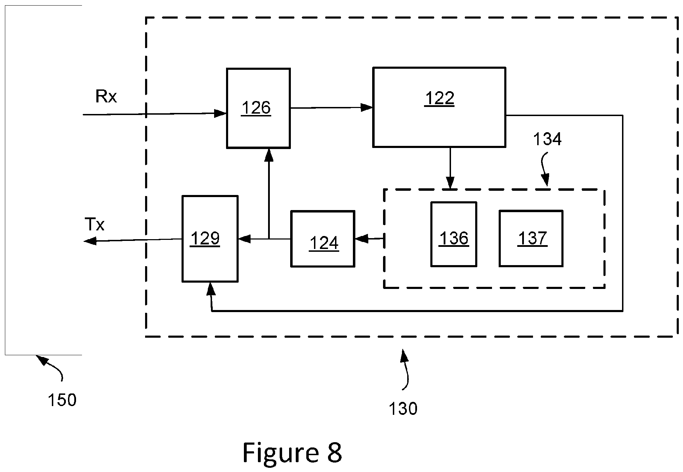

As depicted in Figure 4 (in simplified form) each distance-ranging packet 15, 17 is a random synchronization sequence of bits that is carried by a carrier wave. This is discussed in more detail in relation to Figure 8 below.

As shown in Figure 4, a first packet 15 is transmitted over a first channel from the initiator 10 to the reflector 20 at a first time of departure $ToD_I$. The first packet is received at the reflector 20 (labelled as packet 15') at a first time of arrival $(ToA_R)$. The time of flight (ToF) is equal to the difference between the time of arrival (determined at the reflector) and the time of departure of the packet (determined at the initiator) i.e., $ToF = ToA_R - ToD_I$. The reflector 20 then transmits a second or return package 17 on the same channel at a time of departure $(ToD_R)$. The second package is received at the initiator (labelled as packet 17') at a time of arrival $(ToA_I)$. This process is then repeated for a plurality of channels, although in Figure 4, for simplicity, only a single channel is depicted.

Thus, for each channel each device (reflector 20 and initiator 10) determines two time-stamps, ToA and ToD. These time-stamps can be determined using local clocks. In addition, for each packet received, the reflector 20 and the initiator 10 each measure the PQI. As explained above, according to the prior art, the reflector's measured data including the PQI and time-stamp data are transmitted from the reflector 20 to the initiator 10 via a legacy connection A (see Figure 1). This data can often be up to 500 Bytes in total for the plurality of channels in a two-way packet exchange process. The initiator 10 can then determine the distance of the reflector 20 from the initiator 10 using a timing-based distance ranging algorithm, examples of which are well known in the art.

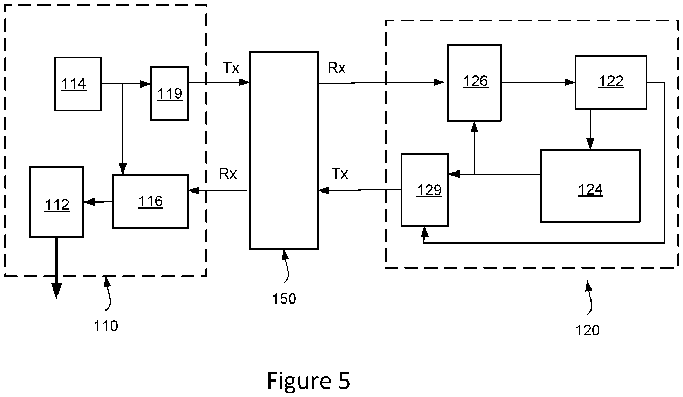

Figure 5 is a block diagram showing a short-range wireless communication system according to an embodiment of the present disclosure. The system comprises an initiator 110 and a reflector 120. The initiator 110 and the reflector 120 are configured to communicate via a plurality of channels 150. In some embodiments, the initiator 110 and the reflector 120 may each be Bluetooth® communication devices. In other embodiments, the initiator 110 and the reflector 120 may each be short-range radio devices, or NFC devices, etc. In this embodiment, the system is configured for two-way tone exchange (or phase-based distance ranging), as shown in Figure 3.

The initiator 110 may be as defined in the prior art. In the particular embodiment shown in Figure 5, the initiator comprises a tone generator 114, a mixer 116, a power amplifier 119 and a processor 112. The processor 112 is configured to execute a distance ranging algorithm. In this embodiment, the tone generator 114 is a local oscillator (LO).

In the embodiment shown in Figure 5, the reflector 120 also comprises a power amplifier 129, a processor 122, a mixer 126 and a tone generator 124, wherein the tone generator 124 is a local oscillator. However, in comparison to the prior art, the reflector 120 of the present disclosure is configured to reduce the amount of measurement data that is required to be transmitted to the initiator 110 via the legacy connection A (see Figure 1), as explained below.

In the present disclosure, when an incoming tone signal (Rx) is received at the reflector 120 it is provided to the mixer 126. The mixer 126 (and mixer 116) is a signal multiplier used for RF down-conversion for the received tone signal (the mixer is not used at all for the transmitted tone signal Tx). The processor 122 that is electrically coupled to the mixer 126 then processes the down-converted incoming tone signal, including measuring the tone quality indicator (TQI) and IQ value. The tone generator 124 (i.e. local oscillator) generates an outgoing tone signal to be transmitted (Tx) by the reflector on the same channel (as shown in Figure 3). However, the processor 122 also controls or instructs the power amplifier 129 to modulate the amplitude of the outgoing tone signal based on the determined TQI.

In some embodiments, if the determined TQI is less than a given threshold then the processor 122 instructs the amplifier 129 to attenuate or reduce the amplitude of the outgoing tone signal. The threshold can be set to be equal to an acceptable or minimum TQI. It will be appreciated that the threshold can be set depending on the particular parameters and requirements of the system. Thus, an outgoing tone signal with a low amplitude is indicative of a poor TQI. A poor or bad TQI value may be caused by interference, noise, or other factors.

In some embodiments, if the determined TQI is less than a given threshold the processor 122 instructs the amplifier 129 to significantly attenuate the amplitude of the outgoing tone signal, for example by reducing the amplitude by at least 50%, or optionally by at least 80%. In some embodiments, the amplitude of the outgoing tone signal may be modified in proportion to the determined TQI. In some embodiments, the processor 122 may instruct the amplifier 129 to boost or increase the amplitude of an outgoing tone signal if the determined TQI is above a given threshold.

In one example, the processor 122 controls the power amplifier 129 to set the amplitude of the outgoing tone signal to a first value if the determined TQI is above the given threshold (i.e. the first amplitude is indicative of a "good" TQI) and the processor 122 controls the power amplifier 129 to set the amplitude of the outgoing tone signal to a second value if the determined TQI is below the given threshold (i.e. the second amplitude is indicative of a "bad" TQI). Thus, the second amplitude is less than the first amplitude. This is an example of a two-level amplitude modulation scheme. In other embodiments, any number of amplitude levels may be provided.

It will be appreciated that in a multi-antenna scenario (i.e. if either of the reflector and initiator comprise two or more antennas) the amplitude modulation can be applied to all antenna paths. Individual amplitude modulation can be applied by the processor 122 per antenna path, depending on the measured TQI value for the given antenna path.

Accordingly, as described above, the outgoing tone signal provides at least rough inline TQI data. This means that the TQI data measured by the reflector 120 is not required to be transmitted to the initiator 110 via a legacy connection (or protocol packets), thus the amount of data required to be transmitted to the initiator 110 is reduced, thereby reducing latency and improving efficiency. This also allows the initiator to identify from the received tone signals whether a strong interferer is affecting a particular channel or group of channels at the reflector side, without requiring the initiator to process additional data received in the protocol packets.

Finally, an additional advantage of the amplitude modulation process of the present disclosure is that it allows the reflector to reduce power usage, as outgoing tone signals having a "bad" TQI value are transmitted with a lower amplitude, hence lower power.

In some embodiments, the amount of data required to be transmitted from the reflector 120 to the initiator 110 (in addition to the tones) may be further reduced by additionally modulating the outgoing tones to transmit inline IQ data. This may completely remove the need to transmit data via the legacy connection (protocol packets) for the purposes of performing distance ranging. To provide the inline IQ data, the processor 122 is further configured to control the local oscillator 124 to modulate the phase of the outgoing tone signal based on the determined IQ value. More specifically, the processor 122 is configured to apply a phase shift to the outgoing tone signal, wherein the phase shift is based on the phase of the determined IQ.

If both the initiator 110 and the reflector 120 have only a single antenna (antenna are not shown in Figure 5 but only a single path is depicted) then there is only a single antenna path for each channel. In this embodiment, the processor 122 determines a phase shift ($\theta_R^k$) for the antenna path that will remove the phase ambiguity term ($e^{j(\varphi_I^k - \varphi_R^k)}$) at the initiator, without requiring separate transmission of the reflector IQ data. This can be done as follows:

The phase shift determined by the reflector on step k is equal to the phase of the measured IQ value, $iq_I^k = \alpha^k e^{j(\phi^k + \varphi_I^k - \varphi_R^k)}$ (see equation 2 for a single antenna path p). Thus, the phase shift determined by the reflector on step k is equal to:

$$(4) - \qquad \theta_R^k = \phi^k + \varphi_I^k - \varphi_R^k$$

wherein (as defined in equation 1 above) $\phi^k$ is the RF channel phase for step $k$, and $\varphi_I^k$ and $\varphi_R^k$ are the phase ambiguity of the initiator and reflector local oscillators.

Without the phase shift (i.e. as taught in the prior art) the return tone signal transmitted by the reflector is equal to $e^{j(\omega_k t + \varphi_R^k)}$. Thus, including the phase shift from equation 4, the phase modified outgoing tone signal transmitted by the reflector according to the present disclosure is therefore:

$$(5) - \quad s^k(t) = e^{j(\omega_k t + \varphi_R^k + \theta_R^k)} = e^{j(\omega_k t + \phi^k + \varphi_I^k)}$$

The initiator measured IQ of the phase modified tone signal received from the reflector is:

$$(6) - \quad iq_{inline\_phase}^k = iq_I^k = \alpha^k * e^{j2\phi^k}$$

(recall from equation 3 that for a single antenna path $iq_{standard}^k = (\alpha^k)^2 * e^{j2\phi^k}$)

Thus, the initiator measured IQ (of the phase modulated tone signal) has a phase equal to two times the RF channel phase. Accordingly, the initiator measured IQ value resulting from equation 6 can be used directly in the distance ranging algorithm (without requiring any additional data from the reflector) because the phase ambiguity term has been removed. This means that the reflector is no longer required to send the IQ values measured for the incoming tones to the initiator, thereby reducing the amount of data that must be sent via the protocol packets.

Accordingly, in some embodiments, the reflector 120 in Figure 5 is configured to output tone signals having a modified phase and a modified amplitude. In other embodiments, only the amplitude of the outgoing tone signals may be modified.

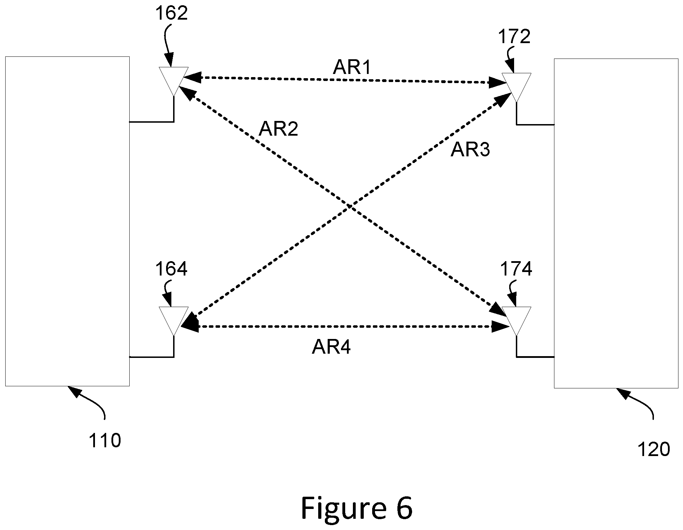

Figure 6 is a diagram of a communication system according to an embodiment of the present disclosure wherein the initiator 110 and the reflector 120 each comprise two antennas. This figure is provided to illustrate the multiple antennas paths that are present for a single channel in the two-way tone exchange process if multiple antennas are present at the initiator and the reflector.

As shown in Figure 6, the initiator 110 comprises a first antenna 162 and a second antenna 164. The reflector 120 comprises a first antenna 172 and a second antenna 174. In addition to the antennas, the initiator 110 and the reflector 120 may have the configuration as shown in Figure 5. It will be appreciated that the reflector 120 and the initiator 110 may comprise any number of antennas, and this 2:2 configuration is just one or many possible configurations. For example, if the reflector 120 has a single antenna and the initiator 110 has two antennas (or vice versa), there are still two antenna paths for each channel.

For a given channel in the two-way tone exchange process, tones can be received at the reflector 120 from the initiator 110 via four antenna paths, AP1, AP2, AP3 and AP4. Each antenna path is represented by a dotted arrow in Figure 6 and is labelled accordingly.

The first antenna path AP1 corresponds to a tone that is transmitted by the first antenna 162 of the initiator and is received at the first antenna 172 of the reflector. The second antenna path AP2 corresponds to a tone that is transmitted by the first antenna 162 of the initiator and is received at the second antenna 174 of the reflector. The third antenna path AP3 corresponds to a tone that is transmitted by the second antenna 164 of the initiator and is received at the first antenna 172 of the reflector. The fourth antenna path AP4 corresponds to a tone that is transmitted by the second antenna 164 of the initiator and is received at the second antenna 174 of the reflector.

The order of the antenna paths during each channel (k) dwell time is shuffled, but for a given channel (k) the same antenna order is used for both the initiator transmission of tones and the reflector transmission of the return tones. Thus, the antenna paths AP1, AP2, AP3 and AP4 are shown as two-way communication arrows. The antennas 162, 164, 172, 174 are selected by the initiator 110 and the reflector 120 respectively according to an antenna path (p) mapping.

If multiple antenna paths exist for each channel of the two-way tone exchange process, then in some embodiments the phase modulation process (described above in connection with equations 4 to 6) may be repeated for each antenna path. Thus, a respective phase shift ($\theta_R^{k,p}$) may be measured and applied to each individual antenna path. However, this process may be overly time consuming and cumbersome for low complexity systems, as antenna switching time is generally very short (of the order of 1 $\mu$s).

In alternative embodiments according to the present disclosure, if multiple antenna paths exist for each channel of the two-way tone exchange process, then a single IQ measurement may be used to modulate the phase of all the outgoing tone signals (i.e. the same phase modulation is applied to all antenna paths). Additionally, a single TQI measurement may also be used to modulate the amplitude of all the transmitted tone signals at the reflector (i.e. the same amplitude modulation is applied to all antenna paths). Optionally, the IQ and TQI values may still be measured for each antenna path. However, in other embodiments the IQ and TQI values are only measured for a single antenna path.

According to a first option, an antenna path of the plurality of antenna paths may be selected as the "modulation" antenna path for all channels. For each channel of the two-way tone exchange process, the IQ value determined for the selected antenna path is used to modulate the phase of each antenna path.

The selected antenna path may be referred to as antenna path m. In this first embodiment, the same antenna path m is selected for each of the plurality of channels, such that the selected antenna path is fixed for each channel. In a non-limiting example, in Figure 6 the first antenna path AP1 may be the selected antenna path m for all channels (regardless of the chronological order shuffling of the antenna paths for subsequent channels). In other examples, the fixed antenna path may be antenna path AP2, or AP3, or AP4.

Thus, for each channel k, the phase shift ($\theta_R^k$) may be equal to the phase of the measured IQ value for antenna path m (as per equation 4). This same phase shift is then applied to each outgoing tone signal transmitted by the reflector on each antenna path p. The IQ value measured by the initiator for each received phase modulated tone signal (see equation 6) is therefore equal to:

$$(7)\text{-} \qquad iq_I^{k,p} = \alpha^{k,p} * e^{j(\phi_I^{k,p} + \phi_I^{k,m})}$$

As shown in equation 7, the IQ value measured by the initiator no longer has a phase equal to two times the RF channel phase (as in equation 6). Instead, the phase is equal to the sum of the phase of the given antenna path p and the phase of the selected antenna path m. However, the phase ambiguity (caused by the local oscillators) is still removed, so the IQ value measured at the initiator can be used directly in the distance ranging algorithm without requiring extra data from the reflector. This means that the reflector is again not required to send the IQ values measured for the incoming tones to the initiator, thereby reducing the amount of data that must be sent via the protocol packets.

As mentioned above, in some embodiments of the first option the TQI measured for the fixed selected antenna path is used to modulate the amplitude of all the antenna paths. In other embodiments, the amplitude of each antenna path can be individually modulated according to the TQI value of the antenna path in question. In other embodiments, only the phase may be modulated and the TQI data may be transmitted to the initiator via protocol packets.

According to the first option (having a fixed selected antenna path for all channels), the complexity of the phase modulation is reduced compared to individual modulation per antenna path, thus efficiency is improved. It is also relatively simple for the distance ranging algorithm to deconvolve the sum of the phases in the measured IQ value (see equation 7). However, if the antenna path m is affected by interference, noise, a radiation null or a channel deep fade, or other factors, then all of the outgoing tone signals for all channels are similarly compromised.

According to a second option, the selected "modulation" antenna path may vary between successive channels. The selected "modulation" antenna path may vary in accordance with a given sequence.

In some embodiments, for each channel the selected "modulation" antenna path may be the antenna path corresponding to the tone signal that is chronologically received first at the reflector. Due to the changing order in which antenna paths are being selected, the chronological order of the antenna paths is rotated (or shuffled) between successive channels, as described below.

If an initiator 110 comprises two antennas and the reflector 120 comprises a single antenna then there are two antenna paths between the antennas, AP1 between the first initiator antenna and the reflector antenna, and AP2 between the second initiator antenna and the reflector antenna. If, for a first channel k, the first tone signal to be received at the reflector 120 is via antenna path AP1, then the IQ value for antenna path AP1 is used to modulate the phase of both antenna path AP1 and antenna path AP2 for channel k. For the next channel k+1, the first tone signal received at the reflector 120 will be via antenna path AP2. Thus, for channel k+1 the antenna path AP2 is the selected antenna path, such that the IQ value for antenna path AP2 is used to modulate the phase of both antenna path AP1 and antenna path AP2 for channel k+1. For channel k+2, antenna path AP1 will again be the selected antenna path. Thus, in this example the selected antenna path oscillates between antenna path AP1 and AP2 for successive channels.

According to the second option, the selected antenna path may be referred to as path $m_k$, as the selected antenna path depends on the channel k. Thus, equation 7 is modified to become equation 8:

$$8 - \quad iq_I^{k,p} = \alpha^{k,p} * e^{j(\phi_I^{k,p} + \phi_I^{k,m_k})}$$

As shown in equation 8, for a channel k, the IQ value measured by the initiator no longer has a phase equal to two times the RF channel phase (as in equation 6). Instead, the phase is equal to the sum of the phase of the antenna path p and the phase of the selected antenna path $m_k$ for the channel. However, the phase ambiguity (caused by the local oscillators) is still removed, so the IQ value measured at the initiator can be used directly in the distance ranging algorithm without requiring extra data from the reflector. This means that the reflector is again not required to send the IQ values measured for the incoming tones to the initiator, thereby reducing the amount of data that must be sent via the protocol packets.

It will be appreciated that it is not necessarily the chronologically first antenna path that is selected as the "modulation" antenna path. In some examples, for each channel the selected "modulation" antenna path may be the antenna path corresponding to the nth tone signal that is chronologically received at the reflector, where n is any integer.

In some embodiments of the second option, the TQI measured for the selected antenna path is used to modulate the amplitude of all the antenna paths for the given channel. In other embodiments, the amplitude of each antenna path is individually modulated according to the TQI value of the antenna path in question. In other embodiments, only the phase may be modulated and the TQI data may be transmitted to the initiator via protocol packets.

According to the second option (having a selected antenna path that varies between successive channels), the complexity of the phase modulation is reduced compared to individual modulation per antenna path, thus efficiency is improved. There is also an improved likelihood of obtaining more reliable measurements compared to the first option, as the antenna path selected is not the same for each channel, so any problems affecting a particular antenna path will not affect all outgoing tone signals. However, compared to the first option, it is more complicated for the distance ranging algorithm to deconvolve the sum of the phases in the measured IQ values (see equation 8).

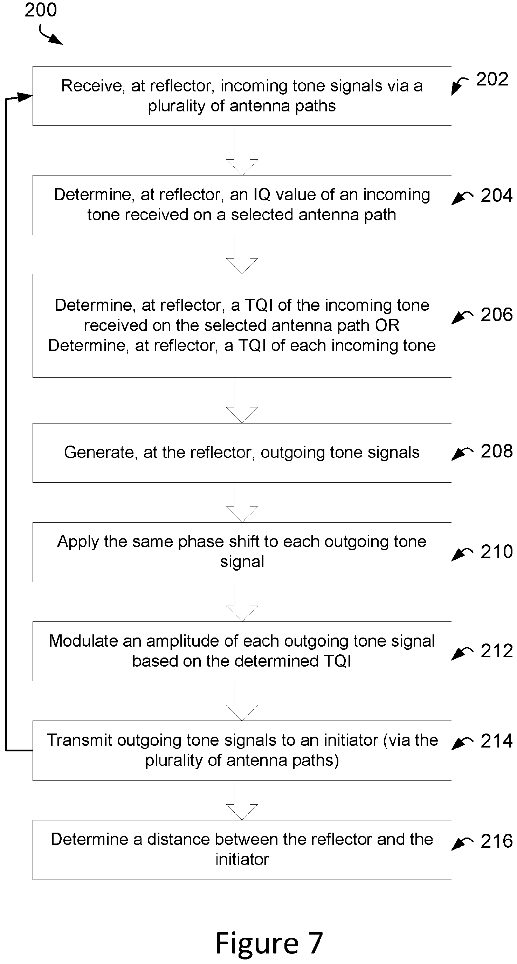

Figure 7 shows a method 200 of performing short-range wireless distance ranging between a reflector and an initiator according to an embodiment of the present disclosure. Method 200 involves a two-way exchange of tones between the initiator and the reflector via a plurality of antenna paths (e.g. as shown in Figure 6),

The method 200 comprises, for each channel of a plurality of channels, steps 202 to 214. Thus, steps 202 to 214 are repeated for each channel, as represented by the arrow in Figure 7.

At step 202, the method includes receiving, at the reflector, incoming tone signals via the plurality of antenna paths. A single tone signal is received on each antenna path. The incoming tone signals may be provided to a mixer 126, as shown in Figure 5.

At step 204, the method comprises determining, at the processor of the reflector, an IQ value of the incoming tone signal that is received on a selected antenna path (m).

Method 200 covers both the first and second options for the multiple antenna path phase modulation of the present disclosure, as described above. According to the first option, the selected antenna path in step 204 is the same antenna path for each of the plurality of channels. According to the second option, the selected antenna path in step 204 is not the same antenna path for each of the plurality of channels. Instead, the selected antenna path may change for each successive channel, as defined by a sequence. In some examples according to the second option, the selected antenna path is the antenna path corresponding to the chronologically first tone signal received at the reflector for the channel in question.

At step 206 the method comprises determining a TQI value of the incoming tone signal received on the selected antenna path, or determining a TQI value of each incoming tone signal.

At step 208, the method comprises generating, at the reflector, outgoing tone signals for transmission on each of the antenna paths. The tone signals may be generated by a local oscillator, or other tone generator.

At step 210, the method comprises applying a phase shift to each of the outgoing tone signals prior to transmission from the reflector, wherein the same phase shift is applied to each tone signal. As explained above, the phase shift is equal to the phase of the measured IQ value for the incoming tone signal received on the selected antenna path (m). The phase shifted outgoing signal for each path is as defined in equation 5.

Optionally, the method may also include step 212, wherein the amplitude of the outgoing tone signals is modulated (prior to transmission) based on the determined TQI from step 206. Thus, in some embodiments the amplitude of the outgoing tone signals are all modulated based on the TQI of the incoming tone signal received on the selected antenna path. In other embodiments, the amplitude of each outgoing tone signal is modulated based on the TQI determined for the corresponding incoming tone signal received on the same antenna path. In other embodiments, step 212 may be skipped and the TQI data may be transmitted to the initiator via protocol packets (legacy connection A as shown in Figure 1).

At step 214, the phase shifted (and optionally amplitude modulated) outgoing tone signals are transmitted from the reflector to the initiator via the plurality of antenna paths.

At step 216, the initiator is configured to determine the distance between the reflector and the initiator, by executing a phase-based distance ranging algorithm. Before executing the distance ranging algorithm, the initiator is configured to determine the IQ value of the phase shifted tone signals received from the reflector. These IQ values can then be used in the distance ranging calculation (as described above). The initiator may also measure the TQI of each tone signal received.

At step 216, any tone signal received at the initiator that has an amplitude less than a given threshold may be disregarded or discarded. As such, any tone signal received at the initiator that has an amplitude less than a given threshold is not used in the distance ranging algorithm.

It will be appreciated that the order of the method steps are not limited to the order shown in the embodiment in Figure 7. For example, the order of method steps 206 and 204 can be swapped. The steps can be performed in any applicable order, as would be understood by the skilled person.

In the embodiment shown in Figures 5 to 7, the reflector 120 and the initiator 110 are configured for two-way exchange of tone signals, but not two-way exchange of distance-ranging packets. It will be appreciated that in some embodiments only tones may be exchanged as part of the distance ranging process. Two-way tone exchange is usually a more accurate method for estimating the distance between a reflector and an initiator compared to two-way packet exchange. Thus, tone exchange (or phase-based distance ranging) may be used in applications where higher accuracy is important.

Figure 8 shows another embodiment of a reflector 130 according to the present disclosure. In this embodiment, the reflector 130 is configured for two-way exchange of packets only. Although two-way packet exchange may be a less accurate method of distance ranging compared to two-way tone exchange, two-way packet exchange is generally a more secure process. This is because two-way tone exchange has a higher vulnerability to hacking, in particular via "man in the middle" type attacks. As such, in some applications, two-way packet exchange may be used if security is more important than a higher degree of accuracy in the distance measurement.

It will be appreciated that the reflector 130 is configured to communicate via a short-range wireless communication system with an initiator (not shown in Figure 8), wherein the initiation may have the same components as the reflector 130, except that the initiator is configured to execute the distance ranging algorithm and the initiator is not required to modulate the amplitude of outgoing packets.

In Figure 8, the reflector 130 comprises a mixer 126, a tone generator 124, a processor 122, a packet modulator 134 and a power amplifier 129. The tone generator 124 and the packet modulator 134 can in combination be considered to form a packet generator. The tone generator 124 may be a local oscillator.

An incoming distance ranging packet (hereafter a packet) is received (Rx) at the reflector 130 and provided to the mixer 126. The mixer 126 is a signal multiplier used for RF down-conversion for the received packet Rx (the mixer is not used at all for the transmitted packet Tx). The processor 122 in electronic communication with the mixer 126 then processes the down-converted incoming packet, including determining the packet quality indicator (PQI) and time stamp(s). The processor 122 is also electrically coupled to the packet modulator 134, wherein the packet modulator 134 and the tone generator 124 are configured to generate an outgoing packet to be transmitted (Tx) by the reflector 130 on the same channel (as shown in Figure 4).

As shown in Figure 8, the packet modulator 134 comprises a random bit generator 136 and a frequency shift keying (FSK) modulator 137. The random bit generator 136 may be implemented using software, or hardware. The random bits generated by the random bit generator 136 are a random synchronization sequence that represents a shared secret between the reflector 130 and the initiator which allows for a time of arrival determination via symbol sequence correlation. The random synchronization sequence is encoded on to a carrier signal by the packet generator 134 using frequency-shift keying modulation. The FSK modulator 137 may be a FSK baseband symbol modulator. It will be appreciated that this is just one example of many possible architectures for the packet modulator 134.

The modulated packet signal is output from the packet modulator 134 to the tone generator 124. The tone generator 124 is configured to generate the carrier wave or carrier signal for the random synchronization sequence. The tone generator 124 may comprise a carrier frequency modulator (not shown) which translates the spectrum of the symbols from the FSK modulator 137 from baseband to radio frequency (RF).

Thus, the packet generator 124 and 134 generates an outgoing packet as explained above. The tone generator 124 is electrically coupled to the power amplifier 129. The processor 122 is configured to control the power amplifier 129 to modulate an amplitude of the outgoing packet based on the determined PQI. Accordingly, the power amplifier 129 modulates the amplitude of the carrier signal of the outgoing packet based on the determined PQI.

In some embodiments, if the determined PQI is less than a given threshold then the processor 122 instructs the amplifier 129 to attenuate or reduce the amplitude of the outgoing packet. The threshold can be set to be equal to an acceptable or minimum PQI. It will be appreciated that the threshold can be set depending on the particular parameters and requirements of the system. Thus, an outgoing packet with a low amplitude is indicative of a poor PQI.

In some embodiments, if the determined PQI is less than a given threshold the processor 122 instructs the amplifier 129 to significantly attenuate the amplitude of the outgoing packet, for example by reducing the amplitude by at least 50%, or optionally by at least 80%. In some embodiments, the amplitude of the outgoing packet may be modified in proportion to the determined PQI. In some embodiments, the processor 122 may instruct the amplifier 129 to boost or increase the amplitude of an outgoing packet if the determined PQI is above a given threshold.

As an example, according to the present disclosure an outgoing packet corresponding to a certain random bit sequence can be transmitted with a power equal to a first value (such as 0 dBm), when the measured PQI is "good" (i.e. above a threshold), or, it can be transmitted with a power equal to a second value (such as -40 dBm) when the PQI is "bad" (i.e. below a threshold). As the reflector 130 is measuring a single PQI per received packet, the transmitted power being used will apply to the entire packet being sent back to the initiator by the reflector. This is an example of a two-level amplitude modulation scheme, however, the system could use any number of levels. For example, a third level could be provided for a "medium" PQI, which could be transmitted using an intermediate transmit power equal to a third value, wherein the third value is between the first value and the second value (such as -20 dBm).

Accordingly, as described above, the outgoing packet provides at least rough inline PQI data. This means that the PQI data measured by the reflector 130 is not required to be transmitted to the initiator via a legacy connection, thus the amount of data required to be transmitted to the initiator is reduced, thereby reducing latency and improving efficiency.

The packet amplitude modulation also allows the initiator to identify from the received packets whether a strong interferer is affecting a particular channel or group of channels at the reflector side, without requiring the initiator to process additional data received in the protocol packets.

Finally, an additional advantage of the packet amplitude modulation process of the present disclosure is that it allows the reflector to reduce power usage, as outgoing packets having a "bad" PQI value are transmitted with a lower amplitude, hence lower power.

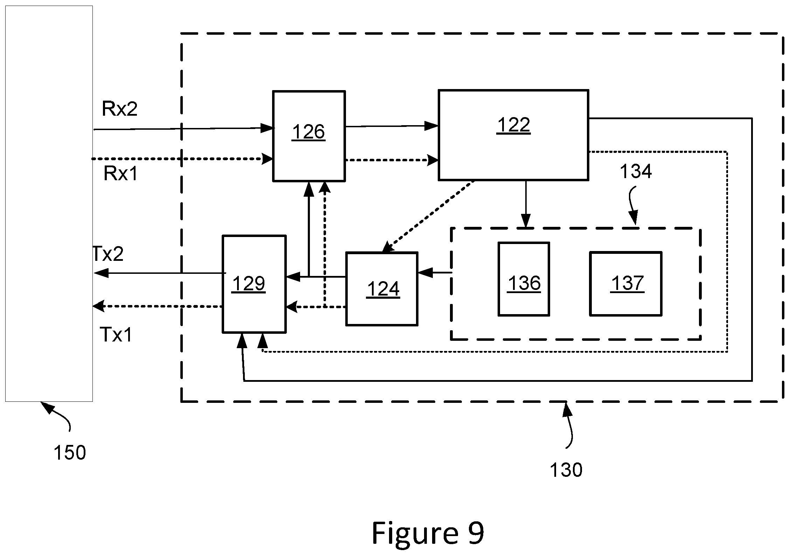

The reflector 130 in Figure 8 may be configured for two-way exchange of both tones and packets, as shown in Figure 9 (again for simplicity the corresponding initiator is not shown). In this embodiment, the reflector 130 advantageously provides the benefits of the improved accuracy of the tone exchange, with the improved security provided by the packet exchange process. The dotted lines/arrows represent the tone exchange and the solid lines represent the packet exchange. Thus, R×1 represents an incoming tone signal, T×1 represents an outgoing tone signal, Rx2 represents an incoming packet and Tx2 represents an outgoing packet.

In Figure 9, the tone generator (e.g. local oscillator) 124 is both the tone generator for outgoing tone signals as described in connection with Figure 5, and the carrier signal generator for the outgoing packets, as described above in connection with Figure 8.

In Figure 9 only a single power amplifier 129 and a single processor 122 are provided, which perform the functions of both the processors 122 and power amplifiers 129 in both Figures 5 and 8. Thus, the processor 122 is configured to process both the incoming tone signals and incoming packets and control the power amplifier 129 to modulate the amplitude of the outgoing tones and packets based on the determined TQI and PQI values respectively. In other embodiments, a separate processor and/or a separate amplifier may be provided for tones and packets respectively (i.e. two power amplifiers and/or two processors).

Figures 5, 8 and 9 are simplified diagrams of the reflector device illustrating components of an integrated circuit (IC) that forms part of the device, wherein the reflector device itself can be a more complex device.

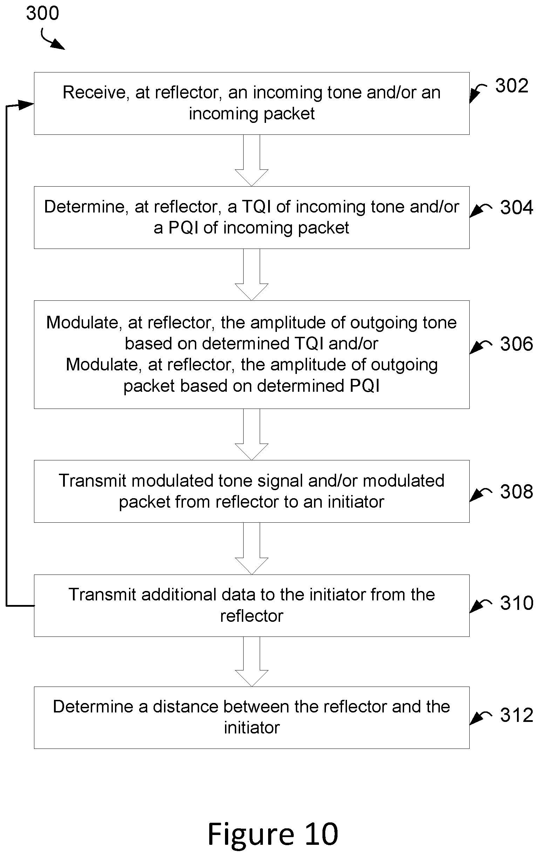

Figure 10 shows a method 300 of performing short-range wireless distance ranging between a reflector and an initiator according to an embodiment of the present disclosure.

The method 300 comprises, for each channel of a plurality of channels, steps 302 to 310. Step 302 comprises receiving, at the reflector, an incoming tone and/or an incoming packet. At step 304 the method comprises determining, at the reflector, the TQI of the incoming tone and/or the PQI of the incoming packet.

At step 306, the method comprises modulating the amplitude of an outgoing tone based on the determined TQI, and/or modulating the amplitude of an outgoing packet based on the determined PQI. The amplitude modulated tone and/or packet is then transmitted to the initiator (step 308). This process is as described above in relation to Figures 5 to 9.

In some embodiments, the reflector may be required at step 310 to transmit additional measurement data to the initiator via a legacy communication channel or protocol packets (see Figure 1 - channel A). This measurement data may include IQ values and/or timestamps. However, this measurement data does not include the determined TQI or PQI values, as this information is transmitted in the tones / packets themselves via the modulated amplitudes.

In other embodiments, step 310 may not be required if all of the measurement information is sent inline with the tones / packets. For example, if the phase of the outgoing tone signal is shifted as described above in addition to the modulation of the amplitude of the outgoing tone signal.

Method steps 302 to 310 are then repeated for each of the plurality of channels.

It will be appreciated that steps 302 to 310 are from the perspective of the reflector. The initiator is configured to transmit the tones and/or packets that are received by the reflector at step 302. The initiator is also configured to receive the amplitude modulated tones and/or packets that are transmitted by the reflector at step 308. The initiator is configured to process the tones and/or packets that are received from the reflector, including measuring the TQI for received tones and measuring the PQI for received packets.

At step 312, the initiator is configured to determine the distance between the reflector and the initiator, by executing a distance ranging algorithm. In this algorithm (or calculation) the initiator data is combined with the data received from the reflector.

In step 312 (and also step 216 of Figure 7), any tones or packets received at the initiator from the reflector that have an amplitude that is lower than a given threshold may be disregarded (i.e. these tones / packets are not used in the distance ranging algorithm). This is because these tones and packets have a TQI or a PQI respectively that is lower than a minimum quality requirement. This may be due to noise, interference, or a variety of other factors.

The present disclosure is applicable to a wide variety of different short-range wireless communications systems, thus the initiator 110 and the reflector 120, 130 may be a plurality of different devices. For example, the reflector may be a key, such a vehicle key, a door key, a mobile phone or other electronic authentication device. The initiator may be an electronic lock. The electronic lock may be configured such that the key can only open the electronic lock if the key is within a given distance of the electronic lock. As such, the distance ranging process using two-way exchange or tones and/or packets is required to determine the distance between the lock and the key.

It will be appreciated that there are a variety of other access control applications for the system and method of the present disclosure, as well as other applications such as asset tracking, location-based services, and real time location systems.

Accordingly, there has been described various embodiments of an integrated circuit (IC) for use in a short-range communication reflector device, and methods for performing distance ranging.

Although particular embodiments of this disclosure have been described, it will be appreciated that many modifications/additions and/or substitutions may be made within the scope of the claims.

It is to be understood that the above description is intended to be illustrative, and not restrictive. Many other implementations will be apparent to those of skill in the art upon reading and understanding the above description. Although the disclosure has been described with reference to specific example implementations, it will be recognised that the disclosure is not limited to the implementations described but can be practiced with modification and alteration within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

**Claims**

1. An integrated circuit for use in a short-range communication reflector device, the integrated circuit comprising:

   a processor; and
   a tone generator electrically coupled to the processor;
   wherein, for each channel of a plurality of channels:

   the processor is configured to process incoming tone signals received via a plurality of antenna paths, and to determine an IQ value of an incoming tone signal received on a selected antenna path of the plurality of antenna paths;
   the tone generator is configured to generate, for each antenna path, an outgoing tone signal for transmission; and
   the processor is configured to instruct the tone generator to apply a phase shift to each outgoing tone signal, wherein the phase shift is equal to the phase of the determined IQ value for the selected antenna path.

2. The integrated circuit of claim 1, wherein the selected antenna path is the same antenna path for each channel of the plurality of channels.

3. The integrated circuit of claim 1, wherein the selected antenna path is a different antenna path of the plurality of antenna paths for successive channels of the plurality of channels.

4. The integrated circuit of claim 3, wherein, for each channel, the selected antenna path is the antenna path on which a chronologically first tone signal is received.

5. The integrated circuit of any preceding claim, further comprising a mixer configured to down-convert incoming tone signals, and wherein the tone generator comprises a local oscillator.

6. The integrated circuit of any preceding claim, further comprising a power amplifier electrically coupled to both the processor and the tone generator, wherein, for each channel of the plurality of channels, the processor is further configured to:

   determine a tone quality indicator, TQI, of the incoming tone signal received on the selected antenna path; and
   instruct the power amplifier to modulate an amplitude of each outgoing tone signal based on the determined TQI of the incoming tone signal received on the selected antenna path.

7. The integrated circuit of any of claims 1 to 5, further comprising a power amplifier electrically coupled to both the processor and the tone generator, wherein, for each channel of the plurality of channels, the processor is further configured to:

   determine a tone quality indicator, TQI, of each incoming tone signal; and
   instruct the power amplifier to modulate an amplitude of each outgoing tone signal based on the determined TQI of the corresponding incoming tone signal.

8. The integrated circuit of claim 6 or claim 7, wherein the processor is further configured to instruct the power amplifier to decrease the amplitude of the outgoing tone signal if the determined TQI is below a quality threshold.

9. A short-range communication reflector device, comprising:

   at least one antenna; and
   the integrated circuit according to any preceding claim.

10. The short-range communication reflector device of claim 9, wherein the short-range communication reflector device is a key, or a mobile phone, or an electronic door lock, or a portable electronic device.

11. A method for performing short-range wireless distance ranging, comprising for each channel of a plurality of channels:

   receiving, at a reflector, incoming tone signals via a plurality of antenna paths;

determining, at the reflector, an IQ value of an incoming tone signal received on a selected antenna path of the plurality of antenna paths;

generating, for each antenna path, an outgoing tone signal for transmission;

applying a phase shift to each outgoing tone signal prior to transmission, wherein the phase shift is equal to the phase of the determined IQ value for the selected antenna path; and

transmitting, from the reflector to an initiator, the phase shifted outgoing tone signals via the plurality of antenna paths.

12. The method of claim 11, wherein the selected antenna path is the same antenna path for each channel of the plurality of channels.

13. The method of claim 11, wherein the selected antenna path is a different antenna path of the plurality of antenna paths for successive channels of the plurality of channels.

14. The method of any of claims 11 to 13, further comprising:

determining a tone quality indicator, TQI, of the incoming tone signal received on the selected antenna path and modulating an amplitude of each outgoing tone signal prior to transmission based on the determined TQI of the incoming tone signal received on the selected antenna path; or

determining a tone quality indicator, TQI, of each incoming tone signal and modulating an amplitude of each outgoing tone signal prior to transmission based on the determined TQI of the corresponding incoming tone signal.

15. The method of any of claims 12 to 14, further comprising:

determining, at the initiator, a distance between the reflector and the initiator using the phase shifted outgoing tone signals and a distance ranging algorithm.

Figure 1 – PRIOR ART

Figure 2

Figure 3

Figure 4

Figure 5

162

172

AR1

AR2

AR3

164

174

AR4

110

120

Figure 6

200

| Receive, at reflector, incoming tone signals via a plurality of antenna paths | 202 |

| Determine, at reflector, an IQ value of an incoming tone received on a selected antenna path | 204 |

| Determine, at reflector, a TQI of the incoming tone received on the selected antenna path OR Determine, at reflector, a TQI of each incoming tone | 206 |

| Generate, at the reflector, outgoing tone signals | 208 |

| Apply the same phase shift to each outgoing tone signal | 210 |

| Modulate an amplitude of each outgoing tone signal based on the determined TQI | 212 |

| Transmit outgoing tone signals to an initiator (via the plurality of antenna paths) | 214 |

| Determine a distance between the reflector and the initiator | 216 |

# Figure 7

Rx

126

122

134

Tx

129

124

136

137

150

130

Figure 8

Figure 9

EP 4 567 466 A1

300

Receive, at reflector, an incoming tone and/or an incoming packet — 302

Determine, at reflector, a TQI of incoming tone and/or a PQI of incoming packet — 304

Modulate, at reflector, the amplitude of outgoing tone based on determined TQI and/or
Modulate, at reflector, the amplitude of outgoing packet based on determined PQI — 306

Transmit modulated tone signal and/or modulated packet from reflector to an initiator — 308

Transmit additional data to the initiator from the reflector — 310

Determine a distance between the reflector and the initiator — 312

# Figure 10

**EUROPEAN SEARCH REPORT**

Application Number

EP 24 16 9655

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 105 917 B1 (BLOECHL MARK O [US]) 31 August 2021 (2021-08-31) * abstract; figures 1-2, 8A, 8B, 9 * * column 3, line 1 - line 60 * * column 6, line 56 - column 8, line 56 * * column 10, line 39 - column 12, line 65 * | 1-5,9, 11-13,15 | INV. G01S13/74 G01S13/76 G01S13/84 |
| A | US 2022/173946 A1 (WU MICHAEL A [US] ET AL) 2 June 2022 (2022-06-02) * the whole document * | 1-15 | |
| A | US 2022/394424 A1 (LI YAN [US] ET AL) 8 December 2022 (2022-12-08) * the whole document * | 1-15 | |
| A | US 11 422 250 B2 (NXP USA INC [US]) 23 August 2022 (2022-08-23) * the whole document * | 1-15 | |

TECHNICAL FIELDS SEARCHED (IPC)

G01S

The present search report has been drawn up for all claims

| Place of search | Date of completion of the search | Examiner |
|---|---|---|
| Munich | 9 September 2024 | López de Valle, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 24 16 9655

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2024

| Patent document cited in search report | | Publication date | Patent family member(s) | | Publication date |
|---|---|---|---|---|---|
| US 11105917 | B1 | 31-08-2021 | EP | 4256373 A1 | 11-10-2023 |
| | | | US | 11105917 B1 | 31-08-2021 |
| | | | WO | 2022119672 A1 | 09-06-2022 |
| US 2022173946 | A1 | 02-06-2022 | NONE | | |
| US 2022394424 | A1 | 08-12-2022 | CN | 115508819 A | 23-12-2022 |
| | | | DE | 102022113402 A1 | 08-12-2022 |
| | | | US | 2022394424 A1 | 08-12-2022 |
| US 11422250 | B2 | 23-08-2022 | EP | 3998496 A1 | 18-05-2022 |
| | | | US | 2022066019 A1 | 03-03-2022 |

EPO FORM P0459

For more details about this annex : see Official Journal of the European Patent Office, No. 12/82